# EUROPEAN PATENT APPLICATION

(11) **EP 2 237 169 A1**
(43) Date of publication of application: **06.10.2010**
(21) Application number: 09250945.4
(22) Date of filing: 30.03.2009
(51) Int. Cl.: G06F 17/30

(54) **Data searching system**

(71) Applicant: BRITISH TELECOMMUNICATIONS public limited company, London EC1A 7AJ (GB)
(72) Inventor: The designation of the inventor has not yet been filed
(74) Representative: Lidbetter, Timothy Guy Edwin

(57) **Abstract**

A method of and system for searching for data, the method comprising the steps of:
receiving a query from a user; ii) analysing the content of the user query received in step i); iii) presenting one or more selection options to the user based on the results of the analysis performed in step ii); iv) receiving the one or more selections from the user; v) augmenting the query in accordance with the selections received in step iv); vi) searching a data index for terms that match with the augmented query; and vii) returning to the user one or more search results which match the terms of the augmented query.

## Description

The present invention relates to a system for searching data and in particular for a system that can analyse a query and match the query contents to one or more relevant multimedia resources.

With the advent of the world wide web, the able to find and retrieve useful and relevant information has become more important and nowadays search engines are essential tools to find information. Search engines such as Google or Yahoo work by virtue of "mass availability", i.e. the content is there in abundance but the most difficult task is to index as much of the content as possible. Content can retrieved by providing short descriptions for example, one or two keywords, to a search engine. Similarly, search engines for the enterprise became essential because corporate intranets began to suffer from information overload. Popular intranet search engines include Autonomy, Fast, Endeca, etc. which typically work with concept association algorithms, where keywords are associated to larger concepts and content is easily browsed and refined to be able to reach information.

The use of online multimedia content has been popularised by Youtube, which allows users to search for video clips of interest. Such searches require, like text searches, short queries, for example, one to three keywords, which can be matched to keywords that are associated with multimedia content. Similar searching techniques can be applied to material such as podcasts and photos stored in online services such as Flickr.

According to a first aspect of the present invention there is provided a method of augmenting a user query for use in searching data, the method comprising the steps of: i) receiving a query from a user; ii) analysing the content of the user query received in step i); iii) presenting one or more selection options to the user based on the results of the analysis performed in step ii); iv) receiving the one or more selections from the user; and v) augmenting the query in accordance with the selections received in step iv).

In step ii) the user query content may be analysed grammatically. In such a case, the grammatical analysis may determine the significant nouns and verbs which comprise the user query content. Alternatively, or in addition, in step ii) the user query content may be analysed for the presence of specific entities or it may be analysed contextually.

In step iii), the user may be presented with one or more of the following as a selection option: a product category, a product name or an action.

According to a second aspect of the present invention there is provided a method of searching data, the method comprising the steps of; a) augmenting a user query according to a method as described above; and b) searching a data index for terms that match with the augmented query. The method may comprise the additional step of c) returning to the user one or more search results which match the terms of the augmented query.

The data to be searched may comprise multimedia data, the multimedia data being associated with one or more metadata tags. The metadata tags may be assigned by users to the associated multimedia data.

According to a third aspect of the present invention there is provided a tangible computer program product comprising computer executable code for performing a method as described above.

According to a fourth aspect of the present invention there is provided a system for searching data, the system configured to execute a method as described above.

Embodiments of the present invention will now be described, by way of example only, with reference to the accompanying drawings in which:
Figure 1 shows a schematic depiction of an arrangement of a known online content repository with a system according to the present invention;
Figure 2 shows a depiction of a flowchart which describes the operation of a method according to the present invention;
Figure 3a shows a natural language query which is provided to the online forum;
Figure 3b shows a graphical depiction of the further keywords that may be selected by the user; and
Figure 4 shows a graphical depiction of such a query representation as it is presented to a user;

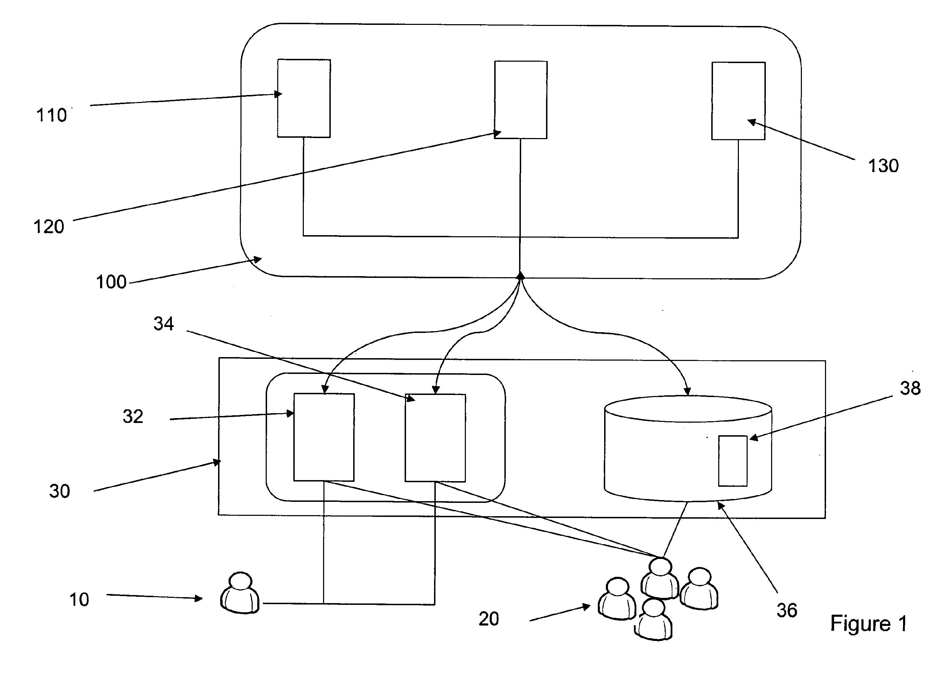

Figure 1 shows a schematic depiction of an arrangement of a known online content repository 30 with a system 100 according to the present invention. The content repository 30 comprises a forum 32 for user generated content such as user queries, answers to queries, recommendations, etc. and a forum search engine 34 which allows a user 10 to search the content held within the forum. It should be understood that the forum may comprise one or more different types of online forums such as newsgroups, message boards, discussion groups, blogs, etc.

The content repository also comprises a multimedia content store 36 which holds user generated multimedia content which has been supplied by members of a community of active users 20. This community of active users may also provide further data which relates to the uploaded user generated multimedia content; this may take the form of applying 'tags' which provide a descriptor of the multimedia content, ratings or recommendations for the multimedia content, links to other online content which may relate to the multimedia content, etc. The multimedia content store 36 may comprise a multimedia search engine 38 which enables a user to search the multimedia content data held in the multimedia content store 36 and any data relating to the multimedia content data. It will be understood that members of the community of active users may post queries and/or responses to the forum 32 and use the search engine 34 to search the content held in the forum.

The present invention provides a system 100 which is able to interpret queries that are submitted to the forum 32 and then provide an answer to the query, for example by directing the user which submitted the query to the most relevant item of multimedia content that is held in the multimedia content store 36.

Referring to Figure 1, the system comprises a plurality of inter-connected elements which comprise query analysis element 110, query representation element 120 and query augmentation element 130. Data may be transmitted from one element to another and each of the elements can receive data from the forum 32, forum search engine 34, multimedia content store 36 and the multimedia search engine 38. Also data from one or more system elements may be presented to a user by the insertion of data into a posting held within the forum 32.

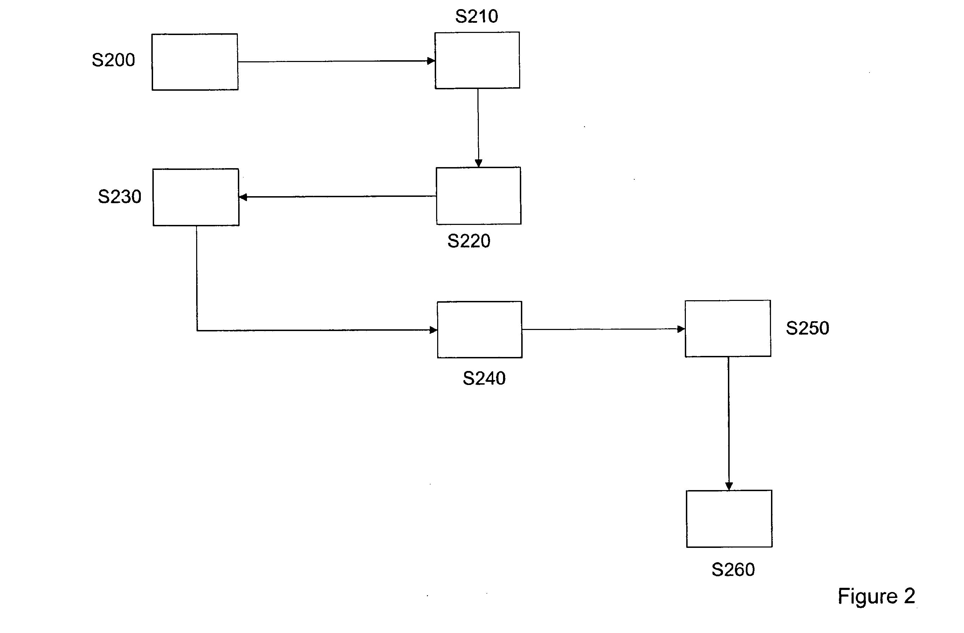

Figure 2 shows a depiction of a flowchart which describes the operation of a method according to the present invention. At step S200 a user submits a query which is then analysed at step S210. A query representation is generated at step S220 and is presented to the user such that at step S230 the user is able to select one or more options from the query representation to create an augmented query at step S240. This augmented query is then used as the basis for searching multimedia content at step S250 with the results of the search being returned to the user at step S260.

The operation of a system and a method according to the present invention will now be described in more detail with reference to Figures 1 & 2.

In operation, a user will enter a query, for example by posting a query on the forum 32. This query will firstly be sent to the query analysis element 110 to determine the contents of the query. For example, the verbs and nouns in the query may be recognised, along with a determination of whether they are strong verbs or nouns. The query analysis element may also determine whether the query comprises any product or brand names; in further alternatives the query analysis element may identify other entities that are comprised within the query such as, for example, addresses, contact details, product characteristics (such as price, internet download speed) etc. It will be understood that this list is not exhaustive and that further entities that may be of interest may be identified within a query.

An example of the function of the query analysis element will now be given. If a user submits the query "I can not get my BT Hub Phone 1010 to register to the BT Hub" then this query can be parsed to give the following structure:

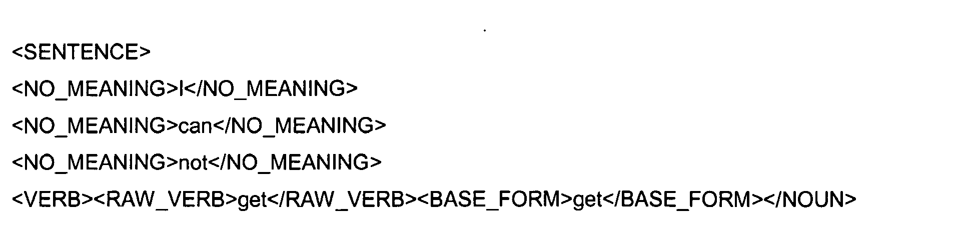

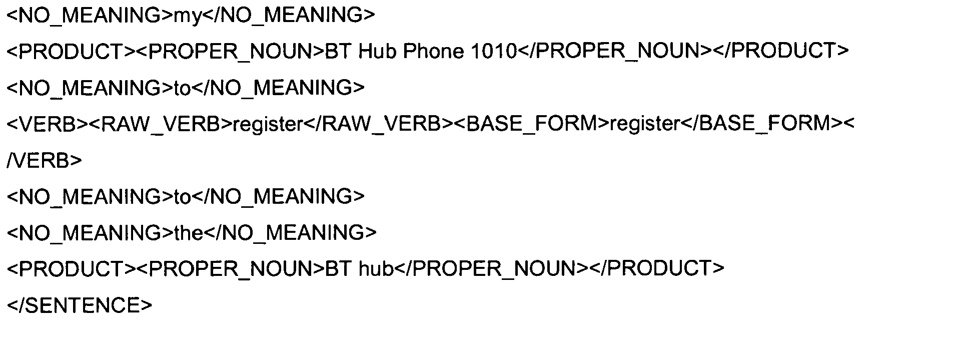

Such a query representation can be obtained through the application of a part of speech tagger (such as, for example the Brill tagger [which can be obtained from http://www.cs.jhu.edu/∼brill/RBT1_14.tar.Z]), which returns a grammatical analysis of the query. The query can be broken down with each word being associated with a particular speech component, such as, for example: noun, verb, adjective, preposition, pronoun, adverb or conjunction. These results can be the subject of further grammatical analysis such that, in turn, identifies punctuation, verb compositions (e.g. negative, affirmative, phrasal verbs), nouns (phrases, compounds, proper nouns) and adjectives.

It will be understood by the person skilled in the art that other part of speech taggers may be used without effecting the operation of the present invention and that the part of speech tagger must be specific to the language of the query. It will also be understood that if languages other than English are to be analysed then it may be necessary to make some adjustments to the query analysis engine (e.g. phrasal verbs may not exist in other languages, etc).

Once the grammatical analysis is complete, then the query analysis element 110 can undertake entity discovery on the query. Depending on their type, some entities can be discovered with direct matching (for example, a product name can be easily identified) however other entities such as an address may require a soft pattern matching technique. The soft matching process involves a training set of addresses with a finely defined grammar (street no, street name, post-code, etc). This grammar can then be matched systematically in the document to highlight a full or an partial match - successfully discovered addresses can then be larked up and displayed to a user. For example, the bit rate and the price of broadband products will require soft matching, whereas the product matching is a hard match (although it may be possible to provide some flexibility to allow for the mis-spelling of product names, this would need to be pre-defined through the provision of additional search terms.).

Analysis of this representation of the query gives the following results:
Query analysis -
Strong verbs: get, register
Strong nouns:
Products: BT Hub Phone 1010, BT Hub

Once the contents of a query have been analysed, it is possible to form a computer representation of that query. It has been observed that sometimes it is difficult to answer queries in a satisfactory manner because a query may be phrased in a different context to that which is used by a suitable answer, for example a query may use one set of keywords or terminology to describe the problem whereas an answer may use different keywords when describing the same problem.

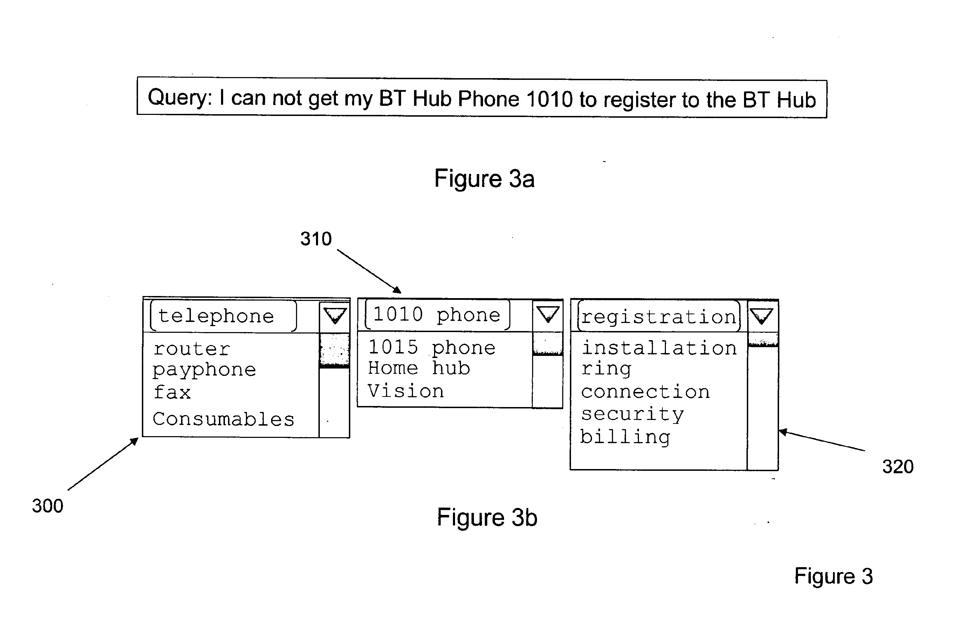

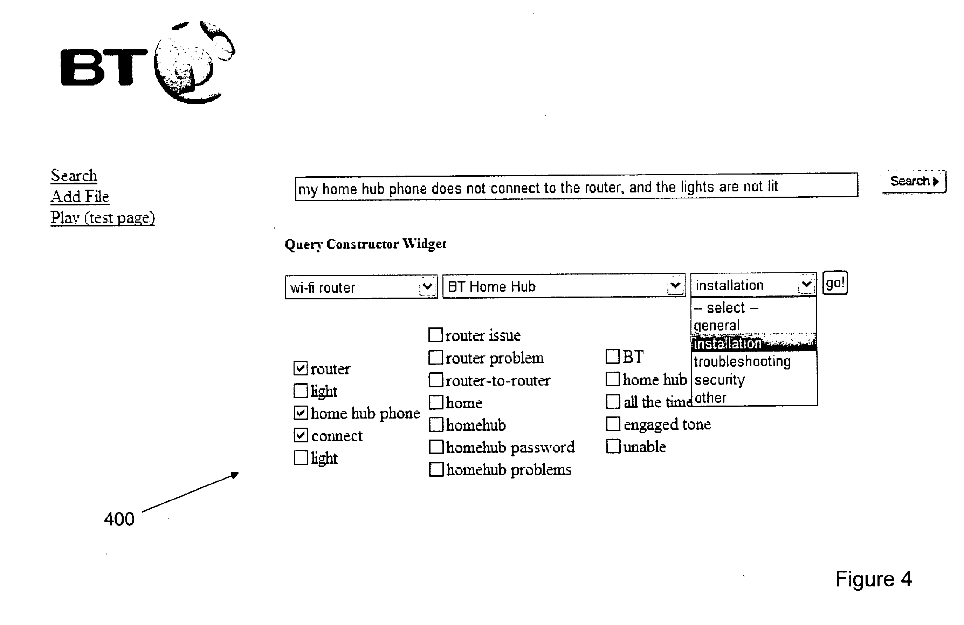

The results obtained from the query analysis element 110 may be processed by the query representation element 120. The query analysis element has identified the most important words or attributes of the query and ranked them in order of significance. The query representation element is able to extract the keywords that are of most significance and can then present the user with a selection of potential alternative or additional keywords that may be of use. Figure 3a shows a natural language query which is provided to the online forum and Figure 3b shows a graphical depiction of the further keywords that may be selected by the user. Referring to Figure 3b, it can be seen that the query analysis element has determined that the query relates to a telephone (in particular the BT Hub Phone 1010) and provides the user with the a drop down menu element 300 which can be used to select one or more other product categories that may be of relevance. A second drop down menu element 310 is provided which allows a user to select one or more other particular products that may be relevant to the query. In this particular case, the 1010 phone has been identified by the query analysis element but the selection of the Home hub (referred to as the BT Hub) as a part of the query representation will improve the quality of the search that will be performed (see below). The verb 'register' was recognised as being significant during the query analysis and thus 'registration' is presented to the user as being of significance. The third drop down menu element 320 allows the user to select other actions that may be included within the query representation. It will be understood that other conventional graphical user interface elements, for example radio buttons, check lists, etc., may be used in place of the drop down menus. It can be seen that the freeform, natural language query supplied by the user can be simplified into a representation that is composed of a product category, a product name, and a process. Figure 4 shows a graphical depiction of such a query representation 400 as it is presented to a user.

These keywords that are presented to a user are keywords that have been detected as strong keywords within the original query (or keywords that share the same root as a keyword found in the original query), keywords that are found in other queries or postings, or keywords that are in found in the online forum and that can be searched by the forum search engine. It is possible, using a statistical analysis, to calculate a link between strong keywords and other keywords (or phrases) for a given context such that if an association exceeds a threshold then the keywords (or phrases) may be considered a good candidate. For details on the calculation of the threshold see G Ducatel et al, "Hybrid Ontology and Keyword Matching Indexing System" from the Proceedings of WWW2006, published May 2006, which can be found at http://www-sop.inria.fr/acacia/WORKSHOPS/IntraWebs2006/Ducatel_Intrawebs2006.pdf. It will be understood that the quality of keyword suggestion will increase as the size of the text repository increases. It has been found that a minimum of 2 MB of user generated data is required to provide suggestions of a consistent quality.

When a query is posted to the forum it is likely to receive a number of answers or responses from other members of the community of active users. As answers are posted, it is possible to augment the query representation by incorporating into the query representation keywords that are frequently posted in answers to the query. The query augmentation element 130 stores the query representation and the additional keywords that are added to the representation. Users may confirm that a keyword is relevant to a query when they posts an answer or alternatively conventional keyword frequency analysis and word weighting techniques can be used to extract keywords frequently associated with a particular query.

The augmented query can be used to query the multimedia content store 36, for example by sending a request to the multimedia search engine 38. The content held in the multimedia content store will normally have one or more tags associated with it, for example by the producers of the content and/or by viewers or users, such that the search engine is able to match queries to the content.

For example, all multimedia resources for which the product category, the product name, and the process match the augmented query can be 'pushed' into the appropriate part of the forum, for example by providing a link to the multimedia resources next to the query. The resources will be visible to all users browsing the forum and the responses of users can be used to rank the multimedia resources, for example by ordering the resources in accordance with the number of times that the resource has been accessed or in accordance with rankings that have been supplied by users.

It will be understood from the foregoing discussion that the present invention will be implemented in software using a conventional client-server computer architecture. The functionality that enables a general purpose computing device (or devices) to perform the method of the present invention may be provided by providing one or more additional computer programs or applications. It will be understood that such software may be deployed to such a computing device via download, for example via the internet, or on some physical media, for example, DVD, CD-ROM, USB memory stick, etc.

## Claims

1. A method of augmenting a user query for use in searching data, the method comprising the steps of:
i) receiving a query from a user;
ii) analysing the content of the user query received in step i);
iii) presenting one or more selection options to the user based on the results of the analysis performed in step ii);
iv) receiving the one or more selections from the user; and
v) augmenting the query in accordance with the selections received in step iv).

2. A method according to Claim 1, whereon in step ii) the user query content is analysed grammatically.

3. A method according to Claim 2, wherein the grammatical analysis determines the significant nouns and verbs which comprise the user query content.

4. A method according to Claim 1, wherein in step ii) the user query content is analysed for the presence of specific entities.

5. A method according to Claim 1, wherein in step ii) the user query content is analysed contextually.

6. A method according to any of Claims 1 to 5, wherein in step iii), the user is presented with one or more of the following as a selection option: a product category, a product name or an action.

7. A method of searching data, the method comprising the steps of;
a) augmenting a user query according to a method according to any of Claims 1 to 6; and
b) searching a data index for terms that match with the augmented query.

8. A method of searching data according to claim 7, the method comprising the further step of :
c) returning to the user one or more search results which match the terms of the augmented query.

9. A method according to Claim 7 or Claim 8, wherein the data to be searched comprises multimedia data, the multimedia data being associated with one or more metadata tags.

10. A method according to Claim 9, where the metadata tags are assigned by users to the associated multimedia data.

11. A tangible computer program product comprising computer executable code for performing a method according to any of claims 1 to 10.

12. A system for searching data, the system configured to execute a method according to any of Claims 7 to 10.
